# EUROPÄISCHE PATENTSCHRIFT

(11) **EP 2 134 055 B1**
(45) Veröffentlichungstag und Bekanntmachung des Hinweises auf die Patenterteilung: **12.12.2012**
(21) Anmeldenummer: 08010510.9
(22) Anmeldetag: 10.06.2008
(51) Int. Cl.: H04L 29/06, H04L 12/46, H04L 12/24

(54) **Verfahren zur Konfiguration von sicheren Übertragungen von Daten zwischen sicheren Netzwerken**
Method for configuring the secure transmission of data between secure networks
Procédé pour la configuration de transmissions sécurisées de données entre des réseaux sécurisés

(43) Veröffentlichungstag der Anmeldung: 16.12.2009
(60) Teilanmeldung: 11188122.3
(73) Patentinhaber: secunet Security Networks Aktiengesellschaft, 45128 Essen (DE)
(72) Erfinder: Roßberg, Michael Dipl.-Ing., 17498 Neuenkirchen (DE); Schäfer, Günter Prof. D.-Ing., 98693 Ilmenau (DE); Martius, Kai Dr., 01738 Dornhain (DE)
(74) Vertreter: Harrison, Robert John

(56) Entgegenhaltungen:
- EP-A- 1 093 254
- WO-A-2005/117694
- US-A1- 2005 094 577
- US-A1- 2006 129 792

## Beschreibung

Die Erfindung betrifft ein Verfahren zur Konfiguration von sicheren Übertragungen von Daten zwischen sicheren Netzwerken.

Verfahren zum Austausch bzw. Transport von Daten zwischen unterschiedlichen Einheiten einer Organisation bzw. eines Unternehmens sind aus der Praxis grundsätzlich bekannt. Bei den aus der Praxis bekannten Verfahren ist zunächst eine aufwendige Konfiguration bzw. Vorbereitung der einzelnen Einheiten der Organisation bzw. des Unternehmens erforderlich. Zunächst müssen in allen Einheiten die für die Kommunikation erforderlichen Parameter der in der Organisation vorhandenen Einheiten bzw. der Einheiten, mit denen Daten ausgetauscht werden sollen, eingespeichert werden, Sobald Einheiten bzw. Netzwerke aus der Organisation bzw. dem Unternehmen entfernt oder hinzugeführt werden, ist eine umständliche Neukonfiguration bzw. Umprogrammierung der einzelnen Einheiten erforderlich. Nachteilig bei den aus der Praxis bekannten Verfahren ist, dass eine Neukonfiguration der Einheiten kostenträchtig sowie fehleranfällig ist. Eine fehlerhafte Konfiguration der Einheiten kann die Sicherheit beim Datentransport zwischen den einzelnen Einheiten des Unternehmens gefährden, so dass Dritte Kenntnis von den transportierten Daten erlangen können.

Demgegenüber liegt der Erfindung das technische Problem zugrunde, ein Verfahren anzugeben, mit dem Netzwerke einer Organisation bzw. eines Unternehmens auf einfache Weise sicher eingerichtet werden können und mit dem die vorstehend beschriebenen Nachteile vermieden werden.

Zur Lösung des technischen Problems lehrt die Erfindung ein Verfahren zur Konfiguration von sicheren Übertragungen von Daten zwischen sicheren Netzwerken, wobei eine übergeordnete Netzwerkstruktur (Overlay) mit zumindest zwei sicheren Netzwerken erstellt wird, wobei ein sicheres Netzwerk benachbart zu einem weiteren sicheren Netzwerk angeordnet wird, wobei zwischen dem sicheren Netzwerk und dem weiteren sicheren Netzwerk in zumindest einem initiatisierungsschritt zumindest eine Verbindung zum Datentransport durch zumindest einen sicheren Tunnel hergestellt wird. Empfohlenermaßen wird zumindest ein vorangehendes, sicheres Netzwerk (Vorgänger) und zumindest ein nachfolgendes, sicheres Netzwerk (Nachfolger) benachbart zu dem sicheren Netzwerk in der übergeordneten Netzwerkstruktur angeordnet. Es liegt im Rahmen der Erfindung, dass alle sicheren Netzwerke in der übergeordneten Netzwerkstruktur miteinander verbunden sind. Es empfiehlt sich, dass das sichere Netzwerk und das weitere sichere Netzwerk bevorzugt mit der Maßgabe miteinander verbunden sind, dass die Verbindung entlang der übergeordneten Netzwerkstrukturen eingerichtet wird. Vorzugsweise werden die Daten in zumindest einem Transportschritt von dem sicheren Netzwerk über die Verbindung zu einem sicheren Zielnetzwerk. übermittelt bzw. gesendet. Gemäß einer bevorzugten Ausführungsform wird zwischen dem Vorgänger und dem Nachfolger eine Verbindung zum Datentransport zweckmäßigerweise durch zumindest einen sicheren Tunnel hergestellt. Es ist möglich, dass das sichere Netzwerk ein drahtloses Netzwerk (WLAN) ist. Es empfiehlt sich, dass ein sicheres Netzwerk mit der Maßgabe ausgestaltet ist, dass zweckmäßigerweise ausschließlich ein autorisierter Zugriff auf das sichere Netzwerk bzw. aus zumindest einer, in dem sicheren Netzwerk angeordnete Komponenten möglich ist. Eine in dem sicheren Netzwerk angeordnete Komponente ist beispielsweise ein Computer, ein mobiler Computer, ein Personal Digital Assistant (PDA) oder ein weiteres sicheres Netzwerk, beispielsweise ein drahtloses Netzwerk (WLAN).

Es liegt im Rahmen der Erfindung, dass die übergeordnete Netzwerkstruktur eine topologische Struktur und vorzugsweise eine zweidimensionale topologische Struktur ist. Es ist möglich, dass die topologische Struktur dreidimensional oder höher dimensional ausgestaltet ist. Zweckmäßigerweise werden die sicheren Netzwerke in der übergeordneten Netzwerkstruktur anhand ihrer beispielsweise nach aufsteigenden Werten geordneten Adressen angeordnet. Gemäß einer Ausführungsform werden die Verbindungen zwischen den sicheren Netzwerken zumindest der topologischen Struktur bzw. der übergeordneten Netzwerkstruktur entsprechend ausgebildet. Die Summe der vorzugsweise physischen Verbindungen, die zwischen den sicheren Netzwerken existieren bzw. über die Daten zwischen sicheren Netzwerken übermittelt werden, wird als Transportnetz bezeichnet. Es ist möglich, dass das Transportnetz von der übergeordneten Netzwerkstruktur abweicht. Es liegt im Rahmen der Erfindung, dass das Transportnetz zumindest die Verbindungen zwischen den sicheren Netzwerken aufweist, die vorzugsweise entlang der übergeordneten Netzwerkstruktur ausgebildet sind. Gemäß einer bevorzugten Ausführungsform sind in dem Transportnetz bevorzugt eine Mehrzahl von sicheren Netzwerken und besonders bevorzugt alle sicheren Netzwerke miteinander bzw. unter einander verbunden.

Dass die Verbindung zwischen dem sicheren Netzwerk und dem weiteren sicheren Netzwerk bzw. dem Vorgänger und/oder Nachfolger durch zumindest einen sicheren Tunnel hergestellt wird, meint im Rahmen der Erfindung, dass die Verbindung über ein anderes Netz bzw. eine andere Netzinfrastruktur zum Transfer von Daten von dem sicheren Netzwerk zu dem weiteren sicheren Netzwerk bzw. dem Vorgänger und/oder dem Nachfolger übermittelt werden. Es liegt im Rahmen der Erfindung, dass das Zielnetzwerk ein sicheres Netzwerk ist, das in der übergeordneten Netzwerkstruktur angeordnet ist.

Vorzugsweise wird die Verbindung zwischen dem sicheren Netzwerk und dem weiteren sicheren Netzwerk bzw. dem Vorgänger und/oder dem Nachfolgers über eine virtuelle Verbindung in einer Einheit und/oder über eine direkte Verbindung und/oder ein Zwischensystem hergestellt. Einheit meint im Rahmen der Erfindung eine Überstruktur, die vorzugsweise zumindest ein und bevorzugt zumindest zwei sichere Netzwerke aufweist. Die in einer Einheit bzw. Über struktur angeordneten, sicheren Netzwerke werden nachfolgend als innere Netzwerke bezeichnet. Empfohlenermaßen sind die inneren Netzwerke in der Einheit miteinander verbunden, wobei die Einheit bzw. Überstruktur Teil der übergeordneten Netzwerkstruktur ist. Zweckmäßigerweise wird eine direkte Verbindung im Initialisierungsschritt zwischen zwei sicheren Netzwerken vorzugsweise proaktiv bzw. eigeninitiativ hergestellt. Gemäß einer Ausführungsform des erfindungsgemäßen Verfahrens wird die Verbindung zwischen zwei sicheren Netzwerken über ein Zwischensystem hergestellt, welches Zwischensystem beispielsweise ein beliebiges Netzwerk oder das Internet darstellt.

Es liegt im Rahmen der Erfindung, dass die sicheren Netzwerke in der übergeordneten Netzwerkstruktur in einer Ringstruktur angeordnet werden. Es versteht sich, dass es sich bei der Ringstruktur um eine zweidimensionale topologische Struktur handeln kann. Zweckmäßigerweise ist das sichere Netzwerk benachbart zu dem Vorgänger und dem Nachfolger in einer Ringstruktur angeordnet. Es ist möglich, dass die übergeordnete Netzwerkstruktur, in der die sicheren Netzwerke angeordnet werden, jede beliebige topologische Struktur, beispielsweise die eines Busses, Gitters, Hyperwürfels und dergleichen, annehmen kann.

Zweckmäßigerweise wird jedem sicheren Netzwerk zumindest ein Endpunkt zugeordnet, wobei die sicheren Netzwerke über die Endpunkte in die übergeordnete Netzwerkstruktur eingebunden werden. Gemäß einer Ausführungsform ist ein Endpunkt für jedes an den Endpunkt angeschlossene sichere Netzwerk jeweils vorzugsweise einmal in die übergeordnete Netzwerkstruktur eingebunden. Es ist möglich, dass eine einzelne Komponente, die beispielsweise aus der Gruppe "Computer, mobiler Computer, Personal Digital Assistant" ausgewählt ist über einen eigenen Endpunkt verfügt und in einer bevorzugten Ausführungsform direkt in die übergeordnete Netzwerkstruktur eingebunden ist. Mit anderen Worten ist die einzelne Komponente über einen komponentenseitigen Endpunkt in die übergeordnete Netzwerkstruktur eingebunden. Gemäß einer Ausführungsform des erfindungsgemäßen Vefahrens ist eine Einheit bzw. Überstruktur über einen Endpunkt in die übergeordnete Netzwerkstruktur eingebunden. Der Endpunkt ist vorzugsweise eine Schnittstelle bzw. Verbindungsstelle, mit der das sichere Netzwerk an die übergeordnete Netzwerkstruktur angebunden ist. Zweckmäßigerweise ist der Endpunkt ein Gateway und vorzugsweise ein Sicherheitsgateway. Es empfiehit sich, dass der Endpunkt ein Kommunikationsprotokoll aufweist, mit dem eine Nachrichtenübermittlung bzw. ein Nachrichtenstrom von einem sicheren Netzwerk in die übergeordnete Netzwerkstruktur bzw. von der übergeordneten Netzwerkstruktur in das sichere Netzwerk übermittelt wird. Gemäß einer bevorzugten Ausführungsform des erfindungsgemäßen Verfahrens ist in das Kommunikationsprotokoll zumindest ein kryptografisches Verfahren implementiert. Es empfiehlt sich, dass in dem Endpunkt Informationen bzw. Daten abgelegt sind, mit denen zweckmäßigerweise eine Identifikation des Endpunktes und dem mit dem Endpunkt verbundenen sicheren Netzwerk möglich sind. Informationen bzw. Daten, die in dem Endpunkt abgelegt sind, stellen zweckmäßigerweise die Koordinaten bzw. die Adresse des Endpunktes dar, über den der Endpunkt vorzugsweise eindeutig identifizierbar und bevorzugt kontaktierbar für andere Endpunkte ist. Empfohlenermaßen sind die in den Endpunkten der inneren Netzwerke abgelegten Adressen bzw. Informationen vorzugsweise für unsichere Netzwerke außerhalb der übergeordneten Netzwerkstruktur nicht sichtbar bzw. unlesbar, Ein unsicheres Netzwerk ist beispielsweise ein öffentliches Netzwerk. Mit anderen Worten verfügt der Endpunkt des inneren Netzwerks über keine öffentliche Adresse. Empfohlenermaßen ist die in dem Endpunkt des inneren Netzwerks abgelegte Adresse für ein beliebiges Netzwerk, das beispielsweise in der übergeordneten Netzwerkstruktur angeordnet sein kann und an das das innere Netzwerk nicht angeschlossen ist, nicht sichtbar. Dies meint, dass die Adresse des inneren Netzwerks nicht öffentlich ist. Zweckmäßigerweise ist ein Kontaktieren und/oder Senden von Daten von dem vorstehend beschriebenen, sicheren Netzwerk direkt an das innere Netzwerk nicht möglich. Es empfiehlt sich, dass das Kontaktieren bzw. das Senden von Daten von dem vorstehend beschriebenen, sicheren Netzwerk zu dem inneren Netzwerk ausschließlich über das sichere Netzwerk erfolgt, an welches sichere Netzwerk das innere Netzwerk angebunden ist. Gemäß einer Ausführungsform des erfindungsgemäßen Verfahrens ist es möglich, dass Daten von dem inneren Netzwerk zu dem vorstehend beschriebenen, sicheren Netzwerk in einer bevorzugten Ausführungsform über die übergeordnete Netzwerkstruktur gesendet werden können.

Vorzugsweise wird in zumindest einem Überprüfungsschritt die Verbindung des sicheren Netzwerkes zu dem weiteren sicheren Netzwerk bzw. zum dem Vorgänger und/oder dem Nachfolger überprüft, wobei das sichere Netzwerk ausschließlich dann in der übergeordneten Netzwerkstruktur verbleibt, wenn die Verbindung des sicheren Netzwerks zu dem weiteren sicheren Netzwerk bzw, Vorgänger und/oder dem Nachfolger als funktionssicher bzw. funktionsfähig detektiert wird. Es empfiehlt sich, dass der Überprüfungsschritt durch den Endpunkt durchgeführt wird. Zweckmäßigerweise sendet der Endpunkt des sicheren Netzwerkes vorzugsweise periodisch ein Signal an den Endpunkt des weiteren sicheren Netzwerkes bzw. des Vorgängers und/oder an den Endpunkt des Nachfolgers. Gemäß einer bevorzugten Ausführungsform der Erfindung wird das Signal von dem Endpunkt des weiteren sicheren Netzwerks bzw. des Vorgängers und/oder dem Endpunkt des Nachfolgers empfangen. Es empfiehlt sich, dass der Endpunkt des weiteren sicheren Netzwerks bzw. des Vorgängers und/oder der Endpunkt des Nachfolgers eine Antwort an den Endpunkt des sicheren Netzwerkes zurücksenden. Für den Fall, dass das von dem Endpunkt des sicheren Netzwerkes ausgesendete Signal mit der Antwort erwidert wird, wird die Verbindung des sicheren Netzwerkes zu dem weiteren sicheren Netz werk bzw. dem Vorgänger und/oder dem Nachfolger als funktionssicher bzw. funktionsfähig detektiert. Wird das Signal des sicheren Netzwerkes von dem Endpunkt des weiteren sicheren Netzwerkes bzw. des Vorgängers und/oder dem Endpunkt des Nachfolgers nicht bzw. nicht in einem vorgegebenen Zeitintervall beantwortet, so nimmt der Endpunkt des sicheren Netzwerkes zweckmäßigerweise, empfohlenermaßen nach einer und vorzugsweise nach einer Mehrzahl von Wiederholungen an, dass das weitere sichere Netzwerk bzw. der Vorgänger und/oder der Nachfolger nicht mehr in die übergeordnete Netzwerkstruktur eingebunden ist/sind. Es empfiehlt sich, dass der Überprüfungsschritt auch dann ausgeführt wird, wenn keine Daten übertragen werden sollen. Gemäß einer Ausführungsform des erfindungsgemäßen Verfahrens hält das sichere Netzwerk die Verbindung zu dem weiteren sicheren Netzwerk bzw. zu dem Vorgänger und/oder Nachfolger in der übergeordneten Netzwerkstruktur aufrecht. Es liegt im Rahmen der Erfindung, dass das sichere Netzwerk keine Daten bzw. Adressen anderer, sicherer Netzwerke vorhalten muss, um ein anderes, in die übergeordnete Netzwerkstruktur eingebundenes, sicheres Netzwerk aufzufinden und/oder zu kontaktieren. Zweckmäßigerweise wird ein Lokalisierungsschnitt durchgeführt, wenn Datenpakete von dem sicheren Netzwerk zu einem Zielnetzwerk gesendet werden sollen, welches Zielnetzwerk dem sicheren Netzwerk unbekannt ist.

Es liegt im Rahmen der Erfindung, dass in zumindest einem Lokalisierungsschritt ein sicheres, unbekanntes Netzwerk erfasst und in die übergeordnete Netzwerkstruktur eingefügt wird. Zweckmäßigerweise wird das sichere, unbekannte Netzwerk mit der Maßgabe in die übergeordnete Netzwerkstruktur eingefügt, dass es zwischen zwei bereits in der übergeordneten Netzwerkstruktur angeordneten, sicheren Netzwerken eingefügt wird. Vorzugsweise wird das sichere, unbekannte Netzwerk in eine ringförmige, übergeordnete Netzwerkstruktur bevorzugt benachbart zu einem vorangehenden und einem nachfolgenden sicheren Netzwerk angeordnet. Gemäß einer bevorzugten Ausführungsform des erfindungsgemäßen Verfahrens meldet sich das sichere, unbekannte Netzwerk in der übergeordneten Netzwerkstruktur an. Es liegt im Rahmen der Erfindung, dass der Endpunkt des sicheren, unbekannten Netzwerks beispielsweise aus einem Verzeichnis zumindest eine Adresse eines Endpunktes eines in die übergeordnete Netzwerkstrukturen eingebundenen sicheren Netzwerks und vorzugsweise eine Vielzahl von Adressen der Endpunkte der in der übergeordneten Netzwerkstruktur angeordneten, sicheren Netzwerke ausliest und auf diese Weise das sichere, in der übergeordneten Netzwerkstruktur angeordnete Netzwerk ermittelt, wobei die Adresse dessen Endpunkts der des Endpunkts des sicheren, unbekannten Netzwerks am ähnlichsten bzw. am nähesten ist. Gemäß einer Ausführungsform kann sich das unbekannte, sichere Netzwerk von dem Endpunkt eines sicheren, in die übergeordnete Netzwerkstruktur eingebundenen Netzwerks, welcher Endpunkt die ähnlichste Adresse aufweist, ermitteln lassen. Es hat sich bewährt, dass die Adressen der Endpunkte, die beispielsweise mit einer 32-Bit-Adresse (Internet Protocol Version 4) oder 128-Bit-Adresse (Internet Protocol Version 6) angegeben sind, nach aufsteigenden Adressen aufgelistet bzw. sortiert werden. Die Größe der Adressen wird dabei empfohlenermaßen aus den von der ersten Dezimalzahl bis zur vierten Dezimalzahl bestimmt. Empfohlenermaßen vergleicht der Endpunkt des sicheren, unbekannten Netzwerks die eigene Adresse in einer bevorzugten Ausführungsform des erfindungsgemäßen Verfahrens ausgehend von der ersten Dezimalzahl bis zur vierten Dezimalzahl zweckmäßigerweise mit den Adressen der Endpunkte der in der übergeordneten Netzwerkstruktur angeordneten, sicheren Netzwerke. Es liegt im Rahmen der Erfindung, dass der Endpunkt die ähnlichste bzw. die am nähesten liegenden Adressen aufweisen, dessen Adresse ausgehend von der ersten Dezimalzahl hin zur vierten Dezimalzahl die geringste Abweichung bzw. Differenz zu der Adresse des Endpunkts des sicheren, unbekannten Netzwerks aufweist. Empfohlenermaßen ist die Adresse des Endpunktes des Vorgängers kleiner als die Adresse des Endpunktes des sicheren, unbekannten Netzwerks. Es empfiehlt sich, dass der Endpunkt des sicheren, unbekannten Netzwerks zumindest eine Austauschanfrage an den Endpunkt des Vorgängers aussendet. Gemäß einer Ausführungsform des erfindungsgemäßen Verfahrens wird von dem Endpunkt des sicheren, unbekannten Netzwerks die Austauschanfrage an den Endpunkt eines beliebigen anderen sicheren Netzwerks in der übergeordneten Netzwerkstruktur ausgesendet. Vorzugsweise leitet der Endpunkt des beliebigen anderen sicheren Netzwerks die Austauschanfrage über die übergeordnete Netzwerkstruktur und/oder das Transportnetz an mindestens einen Endpunkt eines sicheren Netzwerks weiter, welches sichere Netzwerk für das sichere, unbekannte Netzwerk den Vorgänger vorzugsweise gemäß der Reihenfolge der Adressen der Endpunkte der sicheren Netzwerke in der übergeordneten Netzwerkstruktur darstellt. Es ist möglich, dass von dem Endpunkt des sicheren, unbekannten Netzwerks eine Austauschanfrage an den Endpunkt des vorangehenden Netzwerks ausgesendet wird, wobei dieses Signal von dem Endpunkt des vorangehenden Netzwerks bzw. Vorgänger über die übergeordnete Ringstruktur vorzugsweise an den Endpunkt des nachfolgenden Netzwerks bzw. des Nachfolgers übermittelt wird. Es liegt im Rahmen der Erfindung, dass von dem Endpunkt des vorangehenden Netzwerks und/oder dem Endpunkt des nachfolgenden Netzwerks ein Antwortsignal an den Endpunkt des sicheren, unbekannten Netzwerks zurückgesendet wird. Gemäß einer besonders bevorzugten Ausführungsform des erfindungsgemäßen Verfahrens erfolgt die Beantwortung des Signals, das von dem Endpunkt des sicheren, unbekannten Netzwerks ausgesendet wurde, durch den Endpunkt des vorangehenden Netzwerks und/oder den Endpunkt des nachfolgenden Netzwerks mit der Maßgabe, dass eine sichere Verbindung zwischen dem Endpunkt des sicheren, unbekannten Netzwerks und dem Endpunkt des vorangehenden Netzwerks und/oder dem Endpunkt des nachfolgenden Netzwerks erfolgen kann. Zweckmäßigerweise werden in dem Lokalisierungsschritt Verbindungen zwischen den Endpunkten der sicheren Netzwerke entlang der übergeordneten Netzwerkstrukturen und vorzugsweise entlang der topologischen Struktur generiert.

Gemäß einer Ausführungsvariante des erfindungsgemäßen Verfahrens wird zumindest ein weiterer Lokalisierungsschritt ausgeführt, wobei in den Endpunkten abgelegte Informationen über die Verbindungen zwischen den Endpunkten ausgetauscht werden. Empfohlenermaßen sind in den Endpunkten zumindest Adressen bzw. Koordinaten gespeichert, mit denen ein sicheres Netzwerk in der übergeordneten Netzwerkstruktur identifizierbar bzw. kontaktierbar ist. Es empfiehlt sich, dass der Endpunkt des sicheren Netzwerks in dem weiteren Lokalisierungsschritt zumindest ein Anfragesignal an den Vorgänger und/oder den Nachfolger bzw. ein sicheres, unbekanntes Netzwerk sendet, auf welches Anfragesignal der Vorgänger und/oder der Nachfolger und/oder das sichere, unbekannte Netzwerk ein Erwiderungssignal sendet. Vorzugsweise weist das Erwiderungssignal zumindest die Adresse bzw. die Koordinaten des dem betreffenden Netzwerk zugeordneten Endpunkts auf. In einer besonders bevorzugten Ausführungsform des erfindungsgemäßen Verfahrens enthält das Erwiderungssignal zumindest die Adresse bzw. die Koordinaten von Netzwerken, die benachbart zu dem Vorgänger und/oder dem Nachfolger und/oder dem sicheren, unbekannten Netzwerk in der übergeordneten Netzwerkstruktur angeordnet sind. Auf diese Weise werden die Adressen bzw. die Koordinaten der in der übergeordneten Netzwerkstruktur angeordneten Netzwerke zwischen den einzelnen Endpunkten bzw. Netzwerken ausgetauscht und, vorzugsweise in den Endpunkten der sicheren Netzwerke gespeichert. Empfohlenermaßen erfolgt eine Kontrolle der in dem weiteren Lokalisierungsschrtt zwischen den Endpunkten ausgetauschten Adressen bzw. Koordinaten periodisch in dem Überprüfungsschritt.

Zweckmäßigerweise werden die Informationen über die Verbindungen zwischen den Endpunkten mit der Maßgabe ausgetauscht, dass die Verbindung zwischen den Netzwerken umstrukturiert bzw. variiert und/oder dass die Länge der Verbindungen optimiert wird. Zweckmäßigerweise werden die Verbindungen zwischen den sicheren Netzwerken in der übergeordneten Netzwerkstruktur mit der Maßgabe umstrukturiert, dass zusätzliche Verbindungen zwischen den in der übergeordneten Netzwerkstruktur angeordneten sicheren Netzwerken ausgebildet werden. Die Umstrukturierung bzw. Optimierung der Verbindungen in der übergeordneten Netzwerkstruktur erfolgt vorzugsweise proaktiv, wobei zweckmäßigerweise zusätzliche Verbindungen zwischen sicheren Netzwerken bevorzugt aufgebaut werden, die nahe beieinander in dem Transportnetz angeordnet sind um beispielsweise die Geschwindigkeit der Datenübermittlung in der übergeordneten Netzwerkstruktur zu erhöhen. Es ist möglich, dass zwischen zwei sicheren Netzwerken zumindest eine Verbindung zum Datentransport entlang der übergeordneten Netzwerkstruktur und vorzugsweise zumindest zwei Verbindungen zum Datentransport vorhanden sind. Es liegt im Rahmen der Erfindung, dass eine Auswahl der Verbindungen zum Datentransport folgt. Die Verbindungen, über die Daten von einem sicheren Netzwerk zu einem anderen sicheren Netzwerk übermittelt werden, werden auch als Wege bezeichnet, so dass zweckmäßigerweise eine Wegewahl für den Datenverkehr möglich ist, um beispielsweise eine Verbindung bzw. einen Weg für die Übermittlung von Daten zu nutzen, mit dem eine optimale Verbindung zwischen zwei sicheren Netzwerken angegeben wird. Gemäß einer Ausführungsform des erfindungsgemäßen Verfahrens werden Kommunikationsbeziehungen zwischen zwei sicheren Netzwerken von den Endpunkten der sicheren Netzwerke überwacht. Wird beispielsweise durch einen beliebigen, in der übergeordneten Netzwerkstruktur angeordneten Endpunkt bzw. durch ein beliebiges sicheres Netzwerk festgestellt, dass ein sicheres Netzwerk und ein sicheres Zielnetzwerk über das beliebige sichere Netzwerk in der übergeordneten Netzwerkstruktur über das Transportnetz miteinander kommunizieren, so initiiert das beliebige Netzwerk bzw. der beliebige Endpunkt die Ausbildung einer Abkürzung zwischen dem sicheren Netzwerk und dem sicheren Zielnetzwerk bzw. deren Endpunkten insbesondere falls eine direkte Verbindung durch das Transportnetz möglich ist. Auf diese Weise wird die Effektivität der Datenübermittlung durch die übergeordnete Netzwerkstruktur zweckmäßigerweise optimiert. In einer bevorzugten Ausführungsform des erfindungsgemäßen Verfahrens erfolgt eine Optimierung der übergeordneten Netzwerkstruktur durch die Ausbildung von Abkürzungen zwischen empfohlenermaßen nicht unmittelbar nebeneinander angeordneten, sicheren Netzwerken. Es liegt im Rahmen der Erfindung, dass ein sicheres Netzwerk über eine Mehrzahl von Vorgängern und/oder eine Mehrzahl von Nachfolgern verfügt. Es empfiehlt sich, dass die Endpunkte bzw. die sicheren Netzwerke die Stabilität der weiteren, in die übergeordnete Netzwerkstruktur eingebundenen Endpunkte bzw. sicheren Netzwerke überwachen. Stabilität meint im Rahmen der Erfindung unter anderem Informationen hinsichtlich der Erreichbarkeit, der Paketverlustrate, der Verweildauer und der verfügbaren Ressourcen eines Endpunktes bzw. eines sicheren Netzwerkes. Es liegt im Rahmen der Erfindung, dass die beobachteten Stabilitätsinformationen das Transportnetz zwischen den einzelnen Endpunkten bzw. sicheren Netzwerken ausgetauscht und bevorzugt gewichtet werden. Gemäß einer bevorzugten Ausführungsform des erfindungsgemäßen Verfahrens erfolgt die Gewichtung der Stabilität der einzelnen, in die übergeordnete Netzwerkstruktur eingebundenen Netzwerke dadurch, dass die Stabilitäten der einzelnen, in die übergeordnete Netzwerkstruktur eingebundenen Netzwerke miteinander in den einzelnen Endpunkten verglichen werden. Es hat sich bewährt, dass bevorzugt Verbindungen zwischen Endpunkten bzw. sicheren Netzwerken ausgebildet werden, die über eine hohe Stabilität verfügen, so dass die Stabilität der übergeordneten Netzwerkstruktur erhöht wird. Zweckmäßigerweise erfolgt ein Austausch der Stabilitätsinformationen zwischen den sicheren Netzwerken mit der Maßgabe, dass eine Optimierung bzw. Umstrukturierung der übergeordneten Netzwerkstruktur durchgeführt wird.

Gemäß einer bevorzugten Ausführungsform wird der Lokalisierungsschritt und/oder der weitere Lokalisierungsschritt mit einem Unicast-Paket ausgeführt. Es liegt im Rahmen der Erfindung, dass ein sicheres, in der übergeordneten Netzwerkstruktur angeordnetes Netzwerk zumindest ein anderes sicheres Netzwerk kontaktiert. In einer bevorzugten Ausführungsform erfolgt die Durchführung des Lokalisierungsschritts und/oder des weiteren Lakalisierungsschritts ausschließlich über ein Unicast-Paket, Das heißt, dass keine spezifische Netzwerkunterstützung, wie beispielsweise Multicast, Anycast oder Broadcast, benötigt wird.

Es empfiehlt sich, dass in dem Transportschritt von dem sicheren Netzwerk zumindest ein Kontaktaufnahmesignal an das Zielnetzwerk ausgesendet wird und dass das Zielnetzwerk zumindest ein Empfangssignal an das sichere Netzwerk sendet. Vorzugsweise wird das Kontaktaufnahmesignal bzw. das Empfangssignal über Verbindungen in der übergeordnete Netzwerkstruktur von dem sicheren Netzwerk zu dem Zielnetzwerk bzw. von dem Zielnetzwerk zu dem sicheren Netzwerk übertragen. Zweckmäßigerweise werden im Anschluss die Daten von dem sicheren Netzwerk an das Zielnetzwerk gesendet, wenn das Empfangssignal des Zielnetzwerks mit dem von dem sicheren Netzwerk erwarteten Empfangssignal übereinstimmt. Es ist möglich, dass das sichere Netzwerk kein Empfangssignal als Antwort erhält. Es liegt im Rahmen der Erfindung, dass der Lokalisierungsschritt einmal und vorzugsweise wiederholt durchgeführt wird, wenn das sichere Netzwerk nach dem Aussenden des Kontaktaufnahmesignals keine Antwort erhält. Gemäß einer Ausführungsform des erfindungsgemäßen Verfahrens, sendet das sichere Netzwerk nach der Durchführung des Lokalisierungsschritts vorzugsweise ein weiteres Kontaktaufnahmesignal an das Zielnetzwerk aus.

Vorzugsweise werden die Daten verschlüsselt von dem sicheren Netzwerk zu dem Zielnetzwerk übermittelt. Vorzugsweise werden die von dem sicheren Netzwerk versendeten Daten in dem zugehörigen Endpunkt verschlüsselt, bevorzugt an den Endpunkt des Zielnetzwerkes übermittelt, empfohlenermaßen in dem Endpunkt des Zielnetzwerkes entschlüsselt und zweckmäßigerweise an eine Komponente in dem Zielnetzwerk weitergeleitet. Gemäß einer besonders bevorzugten. Ausführungsform des erfindungsgemäßen Verfahrens wird durch das Verfahren eine Security Policy Database (SPD) vorzugsweise für die Verwendung von IPsec-Diensten konfiguriert, von weicher Security Association abgeleitet werden, die für die Verschlüsselung von Daten verwendet werden, welche Daten aus dem sicheren Netzwerk in das Zielnetzwerk gesendet werden.

Es ist möglich, dass sichere Netzwerke im Transportnetz nicht direkt zueinander benachbart angeordnet sind und nicht über direkte Verbindungen, beispielsweise durch andere unsichere Netzwerke kommunizieren können. Empfohlenermaßen ist in diesem Fall nur eine Kommunikation über ein sicheres Netzwerk möglich, welches sichere Netzwerk in der übergeordneten Netzwerkstruktur angeordnet ist. Zur Erhöhung der Sicherheit hat es sich bewährt, nichtöffentliche Adressen zu nutzen, die durch unsichere Netzwerke nicht bestimmt bzw. erkannt und nicht kontaktiert werden können. Gemäß einer bevorzugten Ausführungsform wird bei der Durchführung des Lokalisierungsschritts ein Tunnel und/oder eine virtuelle Verbindung zwischen den kommunizierenden, sicheren Netzwerken aufgebaut. Zweckmäßigerweise verlaufen diese Tunnel und/oder virtuellen Verbindungen entlang der topologischen Struktur der übergeordneten Netzwerkstruktur und werden anschließend empfohlenermaßen umstrukturiert bzw. optimiert.

Der Erfindung liegt die Erkenntnis zugrunde, dass mit dem erfindungsgemäßen Verfahren einfach und funktionssicher Konfigurationen für den sicheren und problemlosen Transport von Daten bzw. Datenaustausch zwischen zwei Netzwerken eingerichtet werden können. Dazu werden keine besonderen Vermittlungsverfahren wie Multicast, Broadcast oder Anycast benötigt und das Verfahren ist somit in allen gängigen Datennetzwerken einsetzbar. Weiterhin werden Daten zwischen zwei Netzwerken mit optimaler Sicherheit transportiert. Es hat sich gezeigt, dass die transportierten Daten effektiv vor einem Angriff von außen geschützt sind. Das erfindungsgemäße Verfahren ist auf beliebige Netzwerke anwendbar und lässt sich unter dem Einsatz etablierter Standards durchführen. Weiterhin liegt der Erfindung die Erkenntnis zugrunde, dass zusätzliche, sichere Netzwerke sowie Netzwerke, die beispielsweise mobile und temporär in die übergeordnete Netzwerkstruktur einzubindende Komponenten enthalten, auf überraschend einfache Weise in die erfindungsgemäße übergeordnete Netzwerkstruktur integrierbar sind. Dazu müssen in den Endpunkten des hinzuzufügenden, sicheren Netzwerkes lediglich zwei Konfigurationen für sichere Tunnel (beim Einsatz mit IPsec entspricht dies den SPD-Einträgen) automatisch erzeugt werden, damit das hinzugefügte Netzwerk von den anderen Endpunkten erfasst werden kann. Ein weiterer Vorteil des erfindungsgemäßen Verfahrens besteht darin, dass beim Entfernen eines Endpunktes eines Netzwerks lediglich eine Verbindung repariert werden muss. Der Erfindung liegt insoweit die Erkenntnis zugrunde, dass ein schneller Positionswechsel der sicheren Netzwerke in der übergeordneten Netzwerkstruktur zur Strukturoptimierung möglich ist. Fernerhin ist ein schneller Positionswechsel, beispielsweise aus Mobilitätsgründen, eines sicheren Netzwerkes in einer Überstruktur möglich, ohne dass bei diesem Positionswechsel die anderen sicheren Netzwerke, die in die übergeordnete Netzwerkstruktur eingebunden sind, von diesem Kenntnis erlangen müssen.

Wesentlich an der Erfindung ist, dass mit dem erfindungsgemäßen Verfahren eine wirkungsvolle Kompensation bzw. eine funktionssichere Reorganisation der übergeordneten Netzwerkstruktur insbesondere beim Ausfall von Endpunkten und/oder sicheren Netzwerken erfolgt. Selbst wenn mehr als ein Viertel der in der übergeordneten Netzwerkstruktur eingebundenen Endpunkte simultan entfernt wird, ist eine Kompensation des Wegfalls der Endpunkte innerhalb weniger Sekunden möglich. Das erfindungsgemäße Verfahren erweist sich darüber hinaus als optimal betriebssicher bzw. störungsunanfällig, da bedingt durch den dezentralisierten Aufbau der Wegfall einzelner Endpunkte problemlos kompensiert werden kann. Fernerhin ist der Verwaltungsaufwand bzw. der Betreuungsaufwand auch bei großen übergeordneten Netzwerkstrukturen überraschend gering. Es ist darauf hinzuweisen, dass sich das erfindungsgemäße Verfahren durch einen hohen Automatisierungsgrad auszeichnet, durch den fehlerträchtige manuelle. Eingriffe bei der Durchführung des erfindungsgemäßen Verfahrens zuverlässig vermieden werden. Erforderliche manuelle Eingriffe beschränken sich auf die Ausgabe von Kommunikationsberechtigungen an die Endpunkte, die in die übergeordnete Netzwerkstruktur integriert werden sollen.

Nachfolgend wird die Erfindung anhand einer lediglich ein Ausführungsbeispiel darstellenden Zeichnung detailliert erläutert. Es zeigen:
- Fig. 1: ein Transportnetz zur Durchführung des erfindungsgemäßen Verfahrens,
- Fig. 2: eine gemäß des erfindungsgemäßen Verfahrens erstellte übergeordnete Netzwerkstruktur,
- Fig. 3: eine schematische Darstellung des Lokalisierungsschritts des erfindungsgemäßen Verfahrens,
- Fig. 4: eine schematische Darstellung des weiteren Lokalisierungsschritts des erfindungsgemäßen Verfahrens und
- Fig. 5: einen schematischen Transportschritt des erfindungsgemäßen Verfahrens.

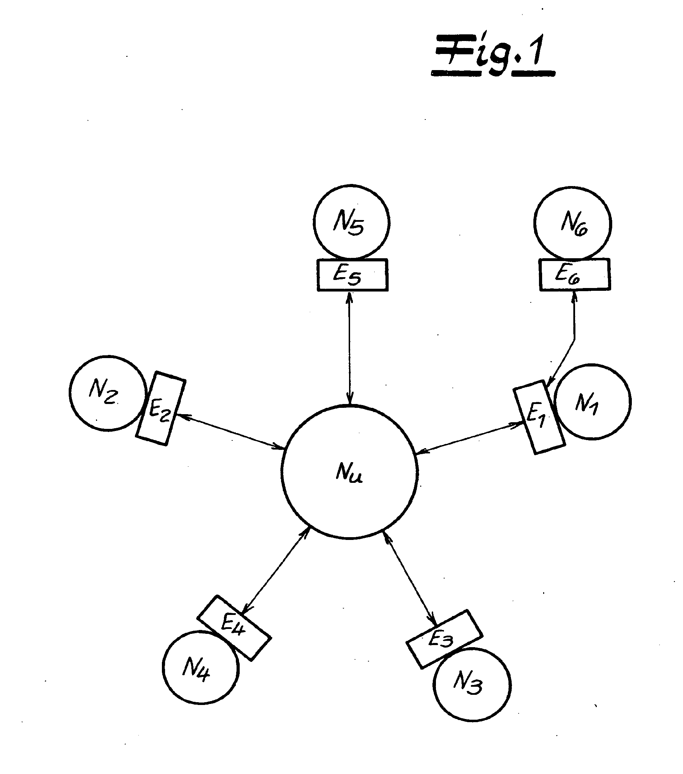

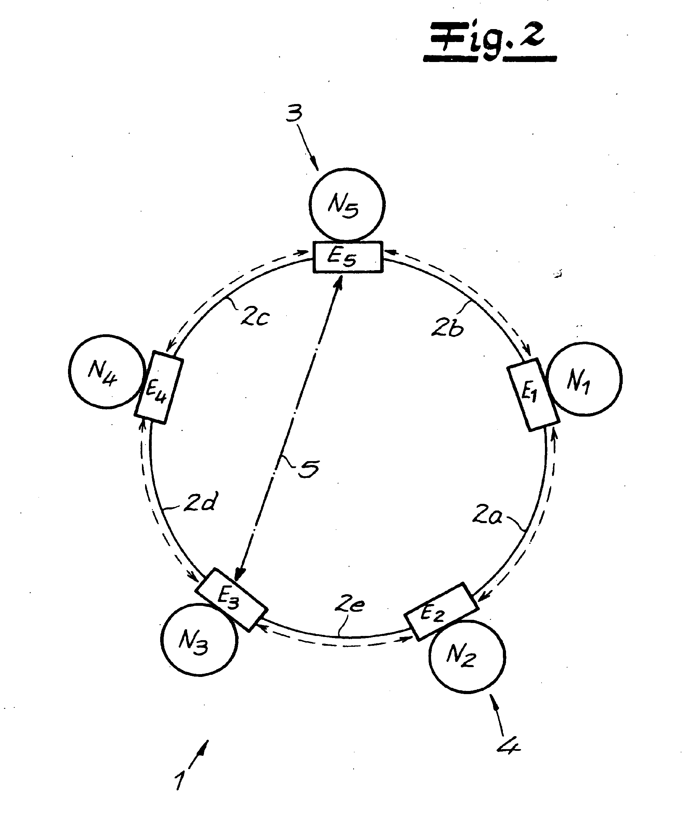

In Fig. 1 ist eine Struktur eines Transportnetzes dargestellt, mit der das erfindungsgemäße Verfahren ausführbar ist., Vorzugsweise und im Ausführungsbeispiel gemäß Fig. 1 sind die sicheren Netzwerke N₁, N₂, N₃, N₄ und N₅ über ihre Endpunkte E₁, E₂, E₃, E₄ und E₅ über ein unsicheres Netzwerk N_{U} verbunden. Gemäß Fig. 1 ist der Endpunkt E**₆** des sicheren Netzwerkes N₆ in dem Netzwerk N₁ angeordnet. Vorzugsweise und im Ausführungsbeispiel nach Fig. 1 verfügt der Endpunkt N₆ über keine öffentliche Adresse. Das Netzwerk N₆ stellt gemäß Fig. 1 ein inneres Netzwerk dar. In Fig. 2 ist eine vorzugsweise und in dem Ausführungsbeispiel ringförmig ausgestaltete übergeordnete Netzwerkstruktur 1 dargestellt. Die Netzwerke N₁, N₂, N₃, N₄ und N₅ sind in dem Ausführungsbeispiel über die den Netzwerken zugehörigen Endpunkte E₁, E₂, E₃, E₄ und E₅ in die übergeordnete Netzwerkstruktur 1 eingebunden. Lediglich das sichere Netzwerk N₆ mit dem Endpunkt E₆ ist noch nicht in die übergeordnete Netzwerkstruktur 1 eingebunden. Zweckmäßigerweise und in dem Ausführungsbeispiel sind in den Endpunkten E₁ bis E₅ die Koordinaten bzw. Werte gespeichert, mit denen die Netzwerke E₁ bis E₅ in der übergeordneten Netzwerkstruktur 1 eindeutig identifizierbar sind. In dem Ausführungsbeispiel verfügen die Endpunkte E₁ bis E₅ über einen IPsec-Dienst, der einen vertraulichen und autentifizierten Transport von IP-Paketen gewährleistet.

Gemäß Fig. 2 sind die Endpunkte E₁ des Netzwerks N₁ und E₂ des Netzwerks N₂ über einen sicheren Tunnel 2a miteinander verbunden. Weiterhin ist das Netzwerk N₁ über den Endpunkt E₁ und den sicheren Tunnel 2b mit dem Endpunkt E₅ des sicheren Netzwerks N₅ verbunden. Der Endpunkt E₄ ist gemäß Fig. 2 über den sicheren Tunnel 2c mit dem Endpunkt E₅, der Endpunkt E₃ über den sicheren Tunnel 2d mit dem Endpunkt E₄ und der Endpunkt E₂ über den sicheren Tunnel 2e mit dem Endpunkt E₃ verbunden.

In dem Ausführungsbeispiel stellt das Netzwerk N₅ den Nachfolger 3 des Netzwerks N₁ und das Netzwerk N₂ den Vorgänger 4 des Netzwerks N₁ dar. Zweckmäßigerweise übermittelt der Endpunkt E₁ in einem Überprüfungsschritt periodisch ein Signal an den Endpunkt E₅ des Nachfolgers 3 und den Endpunkt E₂ des Vorgängers 4. Gemäß des Ausführungsbeispiels übermitteln alle Endpunkte periodisch Signale, um Ausfälle zu detektieren. In dem Ausführungsbeispiel nach Fig. 2 ist parallel zu der ringförmigen übergeordneten Netzwerkstruktur 1 eine Abkürzung 5 zwischen den Endpunkten E₃ und E**₅** eingerichtet, welche Endpunkte in der übergeordneten Netzwerkstruktur nicht direkt benachbart zueinander angeordnet sind.

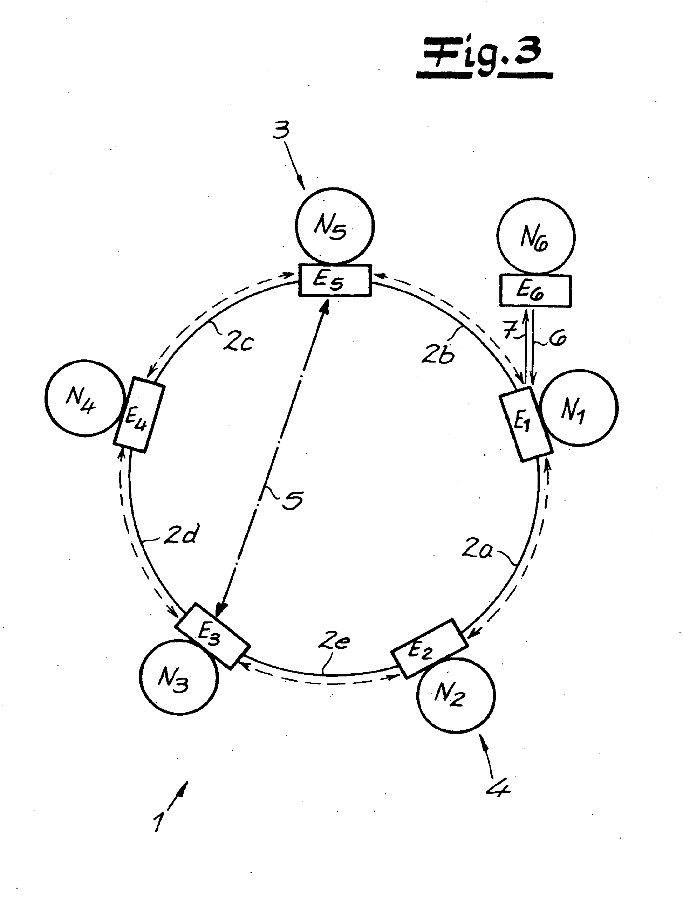

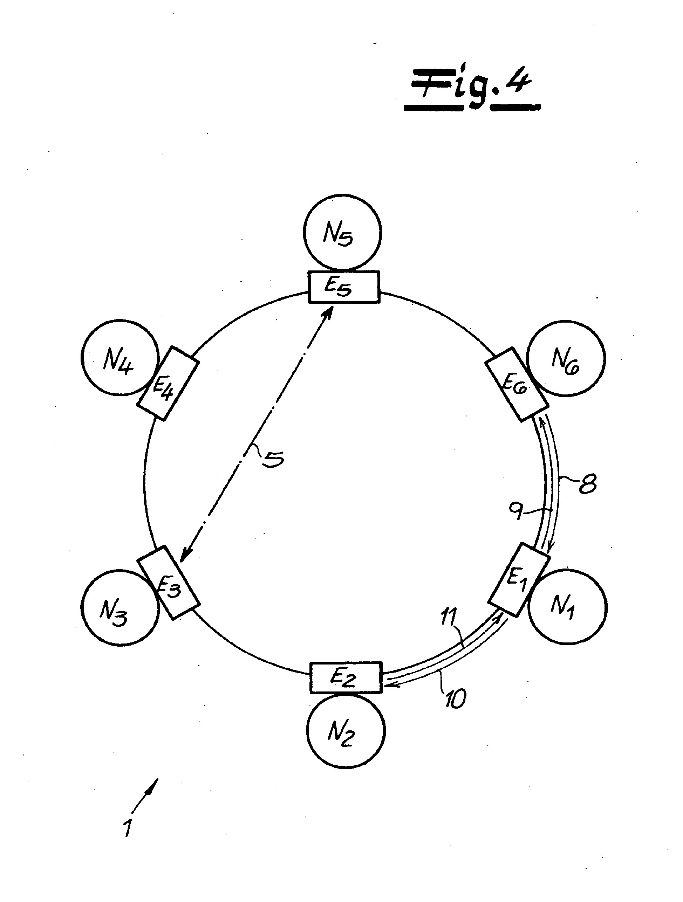

in Fig. 3 ist ein Lokalisierungsschritt dargestellt, in dem ein zusätzliches sicheres Netzwerk N₆ mit einem zugehörigen Endpunkt E₆ erfasst und in die übergeordnete Netzwerkstruktur 1 eingebunden. Um sich einzufügen, muss der Endpunkt E₆ zunächst einen beliebigen anderen Endpunkt kontaktieren, welcher beliebige andere Endpunkte bereits in die übergeordnete Netzwerkstruktur 1 eingebunden ist. Da das Netzwerk N₆ ein inneres Netzwerk ist, kann es den Endpunkt E₁ ermitteln und eine sichere Verbindung gemäß Fig. 3 zu dem Endpunkt E₁ aufbauen. In dem Lokalisierungsschritt kontaktiert der Endpunkt E₆ den Endpunkt E₁, was in der Fig. 3 durch den Pfeil 6 dargestellt ist. Vorzugsweise und in dem Ausführungsbeispiel übermittelt der Endpunkt E₆ eine Austauschanfrage entlang der übergeordneten Netzwerkstruktur 1 an den Endpunkt E₁. In dem Ausführungsbeispiel nach Fig. 3 sendet den Endpunkt E₁ über die ringförmige, übergeordnete Netzwerkstruktur 1 eine weitere Austauschanfrage an den Endpunkt E₅, dessen Adresse in dem Ausführungsbeispiel der von E₆ am ähnlichsten ist In dem Ausführungsbeispiel stellt der Endpunkt E₁ fest, dass er selbst in Bezug auf die ringförmige übergeordnete Netzwerkstruktur 1 verantwortlich ist, da sich das sichere Netzwerk N₆ genau zwischen dem Netzwerk N₁ und seinem Nachbarn N₅ einfügen muss. Nach Fig. 3 sendet der Endpunkt E₁ ein Antwortsignal an den Endpunkt E₆, was durch den Pfeil 7 dargestellt ist. Dieses Antwortsignal enthält die Koordinaten bzw. die Adresse, die die benachbarten sicheren Netzwerke N₁ und N₅ des sicheren Netzwerkes N₆ darstellen. In Fig. 4 ist dargestellt, dass die Endpunkte E₁ und E₆ bzw. E₆ und E₅ über einen sicheren Tunnel miteinander verbunden sind. In dem Ausführungsbeispiel werden die sicheren Tunnel entlang der übergeordneten Netzwerkstrukturen 1 ausgebildet, so dass der Tunnel zwischen den Endpunkten E₁ und E₆ direkt ausgebildet wird. Der Tunnel zwischen den Endpunkten E₅ und E₆ verläuft physisch über den Endpunkt E₁. Vorzugsweise und in dem Ausführungsbeispiel gemäß Fig. 4 wird auf diese Weise trotz der komplexen Struktur des Transportnetzes wieder eine ringförmige, übergeordnete Netzwerkstruktur 1 ausgebildet.

Vorzugsweise und in dem Ausführungsbeispiel führen die in der übergeordneten Netzwerkstruktur 1 angeordneten Endpunkte einen weiteren Lokalisierungsschritt aus, in dem die Informationen hinsichtlich der Koordinaten der einzelnen Endpunkte zwischen den in der übergeordneten Netzwerkstruktur 1 angeordneten Endpunkten ausgetauscht werden, wenn zwischen den einzelnen Endpunkten noch kein Tunnel und/oder keine virtuelle Verbindung errichtet wurde. Weiterhin ist in Fig. 4 die Kommunikation zwischen den Endpunkten E₆ und E₃ dargestellt, die mit dem Ziel erfolgt, eine Verbindung zur Übertragung von Daten zwischen dem Netzwerk N₆ und dem Netzwerk N₃ aufzubauen. Gemäß Fig. 4 sendet beispielsweise der Endpunkt E₆ ein Anfragesignal an den Endpunkt E₁, was in dem Ausführungsbeispiel gemäß Fig. 4 durch den Pfeil 8 dargestellt ist. Vorzugsweise und in dem Ausführungsbeispiel nach Fig. 4 leitet der Endpunkt E₁ das Anfragesignal entlang der übergeordneten Netzwerkstruktur an den Endpunkt E₂ (Pfeil 10) weiter. Der Übersichtlichkeit halber ist in Fig. 4 nicht dargestellt, dass der Endpunkt E₂ das Anfragesignal des Endpunkts E₆ an den Endpunkt E₃ des Zielnetzwerks N₃ weiterleitet. Weiterhin ist in Fig. 4 nicht dargestellt, dass der Endpunkt E₃ ein Erwiderungssignal generiert. Das Erwiderungssignal wird über die übergeordnete Netzwerkstruktur an den Endpunkt E₂ übermittelt, Der Endpunkt E₂ sendet gemäß Fig. 4 (Pfeil 11) das Erwiderungssignal an den Endpunkt E₁, der es an den Endpunkt E₆ weiterleitet. Zweckmäßigerweise und in dem Ausführungsbeispiel wird über den gleichen Weg ein sicherer Tunnel zwischen dem Endpunkt E₆ und dem Endpunkt E₃ aufgebaut.

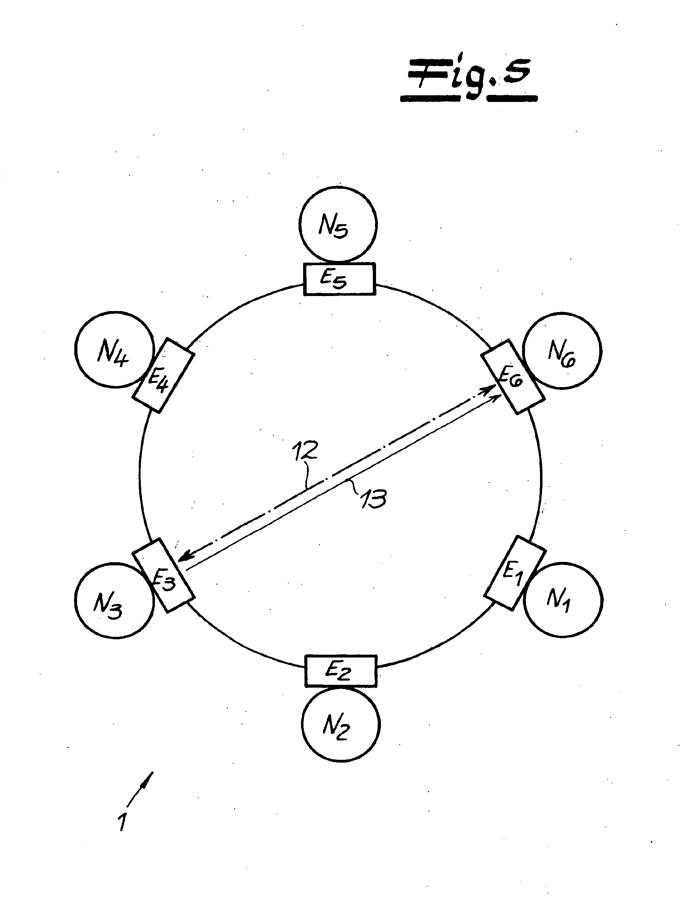

In Fig. 5 ist eine Kommunikation zwischen den Endpunkten E₆ und E₃ dargestellt, mit der Daten über eine durch eine Optimierung entstandene weitere Abkürzung 12 von dem sicheren Netzwerk N₃ zu einem Zielnetzwerk N₆ verschlüsselt übermittelt werden. Da der Endpunkt E₆ zu dem inneren Netzwerk N₆ gehört, verläuft die Abkürzung 12 im Transportnetzwerk weiterhin über den Endpunkts E₁. Gemäß Fig. 5 verläuft die Abkürzung nicht über den Endpunkt E₂, da die Endpunkte E₁ und E₃ auch direkt miteinander kommunizieren können.

## Patentansprüche

1. Verfahren zur Konfiguration von sicheren Übertragungen von Daten zwischen sicheren Netzwerken über Endpunkte,
wobei eine übergeordnete dezentralisierte Netzwerkstruktur (1) mit zumindest zwei sicheren Netzwerken erstellt wird,
wobei jedem sicheren Netzwerk zumindest ein Endpunkt zugeordnet wird,
wobei die sicheren Netzwerke über die Endpunkte in die übergeordnete Netzwerkstruktur (1) eingebunden werden,
wobei der Endpunkt des sicheren Netzwerkes benachbart zu dem Endpunkt des weiteren sicheren Netzwerkes angeordnet wird,
wobei in den Endpunkten Adressen gespeichert sind, mit denen ein sicheres Netzwerk in der übergeordneten Netzwerkstruktur (1) identifizierbar ist,
wobei zwischen dem sicheren Netzwerk und dem weiteren sicheren Netzwerk in zumindest einem Initialisierungsschritt zumindest eine Verbindung zum Datentransport durch zumindest einen sicheren Tunnel hergestellt wird,
wobei zumindest ein inneres Netzwerk in einem sicheren Netzwerk angeordnet wird und wobei dieses innere Netzwerk ein sicheres Netzwerk ist,
wobei in den Endpunkten der inneren Netzwerke eindeutig identifizierbare Adressen abgelegt werden,
**dadurch gekennzeichnet, dass**
ein sicheres, unbekanntes Netzwerk erfasst wird und zwischen einem vorangehenden und einem nachfolgenden sicheren Netzwerk der übergeordneten Netzwerkstruktur angeordneten, sicheren Netzwerken eingefügt wird, die Adresse des Endpunktes des inneren Netzwerkes für ein unsicheres Netzwerk unsichtbar bzw. unlesbar ist,
damit ein sicheres, unbekanntes, inneres Netzwerk mit einem zugehörigen inneren Endpunkt erfasst und in die übergeordnete Netzwerkstruktur (1) benachbart zu einem vorangehenden und einem nachfolgenden sicheren Netzwerk eingebunden wird,
von dem inneren Endpunkt des sicheren, unbekannten, inneren Netzwerks eine Austauschanfrage an den Endpunkt eines beliebigen anderen, sicheren Netzwerks in der übergeordneten Netzwerkstruktur (1) ausgesendet wird,
wobei der Endpunkt des beliebigen anderen, sicheren Netzwerks die Austauschanfrage über die übergeordnete Netzwerkstruktur (1) an einen Endpunkt eines sicheren Netzwerks weiterleitet, welches für das sichere, unbekannte, innere Netzwerk das vorangehende Netzwerk gemäß der Reihenfolge der Adressen der Endpunkte der sicheren Netzwerke in der übergeordneten Netzwerkstruktur (1) darstellt, wobei diese Austauschanfrage von dem Endpunkt des vorangehenden Netzwerks über die übergeordnete Netzwerkstruktur an den Endpunkt des nachfolgenden Netzwerks gemäß der Reihenfolge der Adressen der Endpunkte der sicheren Netzwerke in der übergeordneten Netzwerkstruktur darstellt, übermittelt wird, wobei von dem Endpunkt des vorangehenden Netzwerks ein Antwortsignal an den Endpunkt des sicheren, unbekannten, inneren Netzwerks zurückgesendet wird, wobei dieses Antwortsignal die Adressen, die das vorangehende und das nachfolgende sichere Netzwerk des sicheren, inneren, unbekannten Netzwerk darstellen, enthält.

2. Verfahren nach Anspruch 1, wobei die sicheren Netzwerke in der übergeordneten Netzwerkstruktur (1) in einer Ringstruktur angeordnet werden.

3. Verfahren nach einem der Ansprüche 1 bis 2, wobei in zumindest einem Überprüfungsschritt die Verbindung des sicheren Netzwerks zu dem weiteren sicheren Netzwerk überprüft wird und wobei das sichere Netzwerk ausschließlich dann in der übergeordneten Netzwerkstruktur (1) verbleibt, wenn die Verbindung des sicheren Netzwerks zu dem weiteren sicheren Netzwerk als funktionsfähig detektiert wird.

4. Verfahren nach einem der Ansprüche 1 bis 3, wobei in zumindest einem Lokalisierungsschritt ein sicheres, unbekanntes Netzwerk erfasst und in die übergeordnete Netzwerkstruktur (1) eingefügt wird.

5. Verfahren nach Anspruch 4, wobei zumindest ein weiterer Lokalisierungsschritt ausgeführt wird und wobei in den Endpunkten abgelegte Informationen über die Verbindungen zwischen den Endpunkten ausgetauscht werden.

6. Verfahren nach einem der Ansprüche 4 oder 5, wobei die Informationen über die Verbindungen zwischen den Endpunkten mit der Maßgabe ausgetauscht werden, dass die Verbindungen zwischen den sicheren Netzwerken umstrukturiert bzw. variiert werden und/oder dass die Länge der Verbindungen optimiert wird.

7. Verfahren nach einem der Ansprüche 4 bis 6, wobei der Lokalisierungsschritt und/oder der weitere Lokalisierungsschritt mit einem Unicast-Paket ausgeführt wird.

8. Verfahren nach einem der Ansprüche 1 bis 7, wobei in dem Transportschritt von dem sicheren Netzwerk zumindest ein Kontaktaufnahmesignal an das Zielnetzwerk ausgesendet wird und wobei das Zielnetzwerk zumindest ein Empfangssignal an das sichere Netzwerk sendet.

9. Verfahren nach einem der Ansprüche 1 bis 8, wobei die Daten verschlüsselt von dem sicheren Netzwerk zu dem Zielnetzwerk übermittelt werden.

10. Verfahren nach einem der Ansprüche 1 bis 9, wobei die sicheren Netzwerke die Stabilität der in die übergeordnete Netzwerkstruktur eingebundenen sicheren Netzwerke überwachen, wobei beobachtete Stabilitätsinformationen über die übergeordnete Netzwerkstruktur zwischen den einzelnen Netzwerken, ausgetauscht und gewichtet werden und wobei die Stabilitätsinformation mit der Maßgabe zwischen den Endpunkten der sicheren Netzwerke ausgetauscht werden, dass eine Optimierung bzw. Umstrukturierung der übergeordneten Netzwerkstruktur.

11. Verfahren nach einem der Ansprüche 1 bis 10, wobei in dem Lokalisierungsschritt Verbindungen zwischen den Endpunkten sicherer Netzwerke entlang der übergeordneten Netzwerkstrukturen generiert werden, wobei eine Wegewahl zum Datentransport zwischen zwei sicheren Netzwerken erfolgt.

## Claims

1. Method for the configuration of secure data transmission between secure networks via end points,
whereby a higher level decentralized network structure (1) with at least two secure networks is established,
whereby at least an end point is associated with each secure network ,
whereby the secure networks are integrated via the end points in the higher-level network structure (1),
whereby the end point of the secure network is arranged neighboring the end point of the further secure network,
whereby addresses are stored in the end points by which a secure network is identifiable in the higher-level network structure (1),
whereby in at least an initialization step at least a connection for data transport through at least one secure tunnel is established between the secure network and the further secure network,
whereby at least an inner network is arranged in a secure network and whereby this inner network is a secure network,
whereby unique identifiable addresses are stored in the endpoints of the inner networks,
**characterized in that**
a secure unknown network is established and secure networks are inserted between a previous and a subsequent secure network of the higher-level network structure,
the address of the end point of the inner network being invisible or unreadable for an unsecure network,
such that a secure unknown inner network with an associated inner endpoint is established and bound into the higher-level network structure (1) neighboring a previous and a subsequent secure network,
an exchange query is sent from the internal end point of the secure, unknown, inner network to the end point of any further secure network in the higher level network structure (1),
whereby the end point of the any other secure network passes the exchange query via the higher-level network structure (1) to an end point of a secure network which corresponds to the previous network according to the order of the addresses of the end points of the secure networks in the higher-level network structure (1), whereby this exchange query is passed from the end point of the previous network via the higher-level network structure to the end point of the subsequent network according to the order of the addresses of the end points of the secure networks in the higher-level network structure, whereby a response signal is returned from the end point of the previous network to the end point of the secure, unknown internal network is send back to the end point of the secure unknown internal network, whereby this response signal includes the addresses corresponding to the previous and the subsequent secure network of the secure inner unknown network.

2. Method according to claim 1, whereby the secure networks are arranged in a ring structure in the higher-level network structure (1).

3. Method according to one of claims 1 or 2 whereby the connection of the secure network to the further secure network is checked in at least a verification step and whereby the secure network remains exclusively in the higher-level network structure if the connection of the secure network to the further secure network is detected as being functional.

4. Method according to one of claims 1 to 3, whereby a secure unknown network is recorded in at least a localization step and inserted in the higher-level network structure (1).

5. Method according to claim 4, whereby at least a further localization step is carried out and whereby information about the connections stored in the end points is exchanged between the end points.

6. Method according to one of claims 4 or 5, whereby the information about the connections between the end points is exchanged such that the connections between the secure networks are restructured or varied and/or the length of the connections is optimized.

7. Method according to one of claims 4 to 6, in which the localization step and/or the further localization step is carried out with a Unicast packet.

8. Method according to one of claims 1 to 7, whereby at least a contact request signal is send to the goal network in the transport step from a secure network and whereby the goal network sends at least a receipt signal to the secure network.

9. Method according to one of claims 1 to 8, in which the data are transmitted in encrypted form from the secure network to the goal network.

10. Method according to one of claims 1 to 9, whereby the secure networks monitor the stability of the secure networks embedded in the higher-level network structure, whereby observed stability information about the higher-level network structure is exchanged and weighted between the individual networks and whereby the stability information is exchanged between the end points of the secure networks such that an optimization or a restructuring of the higher-level network structure is performed.

11. Method according to one of claims 1 to 10, whereby connections between the end points of the secure networks are generated along the higher-level network structures in the localization step, whereby a selection of the path for the data transport is carried out between the two secure networks

## Revendications

1. Procédé de configuration de transmissions sécurisées de données entre des réseaux sécurisés par l'intermédiaire de points terminaux,
dans lequel une structure de réseau (1) décentralisée supérieure avec au moins deux réseaux sécurisés est établie,
dans lequel au moins un point terminal est attribué à chaque réseau sécurisé,
dans lequel les réseaux sécurisés sont intégrés par l'intermédiaire des points terminaux dans la structure de réseau (1) supérieure
dans lequel le point terminal d'un réseau sécurisé est agencé en voisin avec le point terminal du réseau sécurisé supplémentaire,
dans lequel, dans les points terminaux, des adresses sont mémorisées, avec lesquelles un réseau sécurisé peut être identifié dans la structure de réseau (1) supérieure,
dans lequel, dans au moins une étape d'initialisation, au moins une liaison pour transport de données est établie à travers au moins un tunnel sécurisé, entre le réseau sécurisé et un autre réseau sécurisé,
dans lequel au moins un réseau interne est agencé dans un réseau sécurisé, et dans lequel ce réseau interne est un réseau sécurisé,
dans lequel des adresses identifiables de manière unique sont classées dans les points terminaux du réseau interne,
**caractérisé en ce que**
un réseau sécurisé inconnu est établi, et des réseaux sécurisés sont insérés entre un réseau sécurisé précédant et un réseau sécurisé suivant de la structure de réseau supérieure,
l'adresse du point terminal du réseau interne n'est pas visible ou n'est pas lisible pour un réseau non sécurisé,
de sorte qu'un réseau interne, inconnu, sécurisé, est établi avec un point terminal interne correspondant, et est relié dans la structure de réseau (1) supérieure, au voisinage d'un réseau sécurisé précédant et d'un réseau sécurisé suivant,
une requête d'échangest est envoyée, depuis le point terminal interne du réseau interne, inconnu, sécurisé, au point terminal de n'importe quel autre réseau sécurisé préféré dans la structure de réseau (1) supérieure,
dans lequel le point terminal de l'autre réseau sécurisé fait suivre la requête d'échange sur la structure de réseau supérieure (1) à un point terminal d'un réseau sécurisé, lequel réseau représente, pour le réseau interne, inconnu, sécurisé, le réseau précédant selon l'ordre des adresses des points terminaux des réseaux sécurisés dans la structure de réseau (1) supérieure, dans lequel cette requête d'échange est transmise depuis le point terminal du réseau précédant, par l'intermédiaire de la structure de réseau supérieure, au point terminal du réseau suivant selon l'ordre des adresses des points terminaux des réseaux sécurisés dans la structure de réseau supérieure, dans lequel, depuis le point terminal du réseau précédant, un signal de réponse est renvoyé au point terminal du réseau interne inconnu sécurisé, dans lequel ce signal de réponse comprend les adresses qui correspondent au réseau précédant sécurisé et au réseau suivant sécurisé du réseau inconnu, interne et sécurisé.

2. Procédé selon la revendication 1, dans lequel les réseaux sécurisés sont agencés selon une structure annulaire dans la structure de réseau (1) supérieure.

3. Procédé selon l'une des revendications 1 à 2, dans lequel, dans au moins une étape de vérification, la liaison du réseau sécurisé avec le réseau sécurisé additionnel est vérifiée, et dans lequel le réseau sécurisé reste exclusivement ensuite dans la structure de réseau supérieure (1), lorsque la liaison du réseau sécurisé vers le réseau sécurisé additionnel est détecté en tant que liaison fonctionnelle.

4. Procédé selon l'une quelconque des revendications 1 à 3, dans lequel, dans au moins une étape de localisation, un réseau inconnu sécurisé est répertorié, et est inséré dans la structure de réseau supérieure (1).

5. Procédé selon la revendication 4, dans lequel au moins une étape de localisation supplémentaire est implémentée, et dans lequel des informations ajoutées sur les liaisons entre les points terminaux sont échangées dans les points terminaux.

6. Procédé selon l'une quelconque des revendications 4 ou 5, dans lequel,
les informations sur les liaisons entre les points terminaux sont échangées dans la mesure où les liaisons entre les réseaux sécurisés sont restructurées, en particulier modifiées, et/ou la longueur des liaisons est optimisée.

7. Procédé selon l'une quelconque des revendications 4 à 6, dans lequel l'étape de localisation et/ou l'étape de localisation supplémentaire est implémentée avec un paquet Unicast.

8. Procédé selon l'une quelconque des revendications 1 à 7, dans lequel, dans l'étape de transport depuis le réseau sécurisé, au moins un signal de prise de contact est envoyé au réseau cible, et dans lequel le réseau cible envoie au moins un signal de réception au réseau sécurisé.

9. Procédé selon l'une quelconque des revendications 1 à 8, dans lequel les données sont transmises de manière encryptée depuis le réseau sécurisé vers le réseau cible.

10. Procédé selon l'une quelconque des revendications 1 à 9, dans lequel les réseaux sécurisés surveillent la stabilité des réseaux sécurisés reliés dans la structure de réseau supérieure, dans lequel des informations surveillées de stabilité sur la structure de réseau supérieure sont échangées et pondérées entre les réseaux individuels, et dans lequel les informations de stabilité sont échangées entre les points terminaux des réseaux sécurisés dans la mesure où une optimisation, en particulier une restructuration, de la structure de réseau supérieure est réalisée.

11. Procédé selon l'une quelconque des revendications 1 à 10, dans lequel, dans l'étape de localisation, des liaisons entre des points terminaux de réseaux sécurisés sont engendrées le long de la structure de réseau supérieure, une sélection de chemin pour le transport de données entre deux réseaux sécurisés étant réalisée.
